# EUROPÄISCHE PATENTANMELDUNG

(11) **EP 2 559 473 A1**
(43) Veröffentlichungstag der Anmeldung: **20.02.2013**
(21) Anmeldenummer: 11177917.9
(22) Anmeldetag: 18.08.2011
(51) Int. Cl.: B01D 53/14

(54) **Verfahren und Vorrichtung zum Aufreinigen eines mit Nitrosamin verunreinigten Produktes einer Prozessanlage**

(71) Anmelder: SIEMENS AKTIENGESELLSCHAFT, 80333 München (DE)
(72) Erfinder: Fischer, Björn, 60318 Frankfurt a.M. (DE); Joh, Ralph, 63500 Seligenstadt (DE); Kuettel, Diego Andres, 65934 Frankfurt am Main (DE); Goetheer, Earl Lawrence Vincent, 2200 Mol (BE); Schneider, Rüdiger, 65817 Eppstein (DE); Kinzl, Markus, 63128 Dietzenbach (DE); Kimball, Erin, 3079 Rotterdam (NL); Sanchez Fernandez, Eva, 2585 The Hague (NL); van der Stel, Rob, 2628 Delft (NL)

(57) **Zusammenfassung**

Die Erfindung betrifft ein Verfahren zum Aufreinigen eines mit Nitrosaminen verunreinigten Produktes (12,13) einer Prozessanlage. Das verunreinigte Produkt wird mit UV-Strahlung (50) aus einer UV-Lichtquelle (58) behandelt, wobei die Nitrosamine zerstört werden. Die Wellenlänge λ der UV-Strahlung (50) wird dabei so eingestellt, dass in dem Produkt enthaltene aktive Waschsubstanzen wie Aminosäuresalze weitgehend erhalten bleiben. Die Erfindung betrifft außerdem eine Vorrichtung (8) zum Regenieren eines mit Nitrosamin verunreinigten Produktes aus einer CO₂ Capture-Anlage, sowie eine Vorrichtung zum Aufreinigen eines mit Nitrosamin verunreinigten Abfallproduktes aus einer CO₂ Capture-Anlage.

## Beschreibung

Bei fossilbefeuerten Kraftwerksanlagen zur Erzeugung elektrischer Energie entsteht durch die Verbrennung eines fossilen Brennstoffes ein kohlendioxidhaltiges Rauchgas. Zur Vermeidung bzw. zur Verringerung von Kohlendioxid-Emissionen muss Kohlendioxid aus den Rauchgasen abgetrennt werden. Zur Abtrennung von Kohlendioxid aus einem Gasgemisch sind allgemein verschiedene Methoden bekannt. Insbesondere zum Abtrennen von Kohlendioxid aus einem Rauchgas nach einem Verbrennungsprozess ist die Methode der Absorption-Desorption gebräuchlich. In großtechnischem Maßstab wird Kohlendioxid dabei mit einem Lösungsmittel aus dem Rauchgas herausgewaschen (CO₂ Capture Prozess).

Gebräuchliche chemische Lösungsmittel, die beispielsweise auf Methanolamin (MEA) basieren, zeigen eine gute Selektivität und eine hohe Kapazität für Kohlendioxid (CO₂). Aminbasierte Lösungsmittel binden jedoch auch irreversibel saure Rauchgasnebenkomponenten (heat-stabil salts) wie Schwefeldioxid SO₂ oder Schwefeltrioxid SO₃ in Form von Sulfit und Sulfat und beeinträchtigen dadurch im Laufe des Prozesses zunehmend die Wirksamkeit des Lösungsmittels. Um diesem Problem zu begegnen, besteht bei Lösungsmitteln, basierend auf Alkanolaminen, die Möglichkeit einer Aufbereitung durch Destillation. Dabei wird das Lösungsmittel erwärmt, sodass die leicht flüchtigen Amine verdampfen und durch Kondensation zurück gewonnen und dadurch von den schwer siedenden Verunreinigungen abgetrennt werden.

Ein viel größeres Problem entsteht im CO₂ Capture-Prozess durch die Verbindung von Aminen mit Stickoxiden NOₓ. Auch wenn die Konzentration an Stickoxiden NOₓ im Rauchgas vergleichsweise gering ist, bilden Amine mit Stickoxiden NOₓ direkt oder über Nebenreaktionen auf Organismen karzinogen wirdkende Nitrosamine (NA). Im Beispiel von MEA können Nitrosodimethylamine (NDMA) Nitrosomorpoline (NMOR) oder auch Nitrosodiethanolamine (NDELA) gebildet werden. Diese Nitrosamine, die durch flüchtige Amine wie MEA gebildet werden, weisen ebenfalls wie die flüchtigen Amine einen geringen Dampfdruck auf. Durch die großen Mengen an Rauchgas, die in einem CO₂ Capture Prozess durchgesetzt werden, kommt es auch zu einer großen Emission von Nitrosaminen in die Atmosphäre.

In der Öffentlichkeit stehen Nitrosamine unter hoher Beachtung, da sie in Nahrungsmitteln (insbesondere bei unsachgemäßer Zubereitung) vorkommen können und in der überwiegenden Zahl als krebserregend gelten. Daher sind Nitrosamine sicherheitsrelevant für den Betrieb von CO₂ Capture-Anlagen mit Amin-basierten Lösungsmitteln. Eine Minimierung der Nitrosaminkonzentration im CO₂ Capture-Prozess ist daher von großer Wichtigkeit für die Akzeptanz der Technologie in der Öffentlichkeit.

Bevorzugt findet die Bildung von Nitrosaminen unter sauren Bedingungen statt (pH < 7). Dennoch kommt es auch zur Bildung von Nitrosaminen bei stark alkalischen Bedingungen.

Auch bei der destillativen Aufreinigung von Amin-basierten Lösungsmitteln oder Lösungsmittelprodukten zur Abtrennung von Degradationsprodukten bereiten Nitrosamine Schwierigkeiten. Die Destillation findet in der Regel bei Temperaturen von unter 150 °C statt. Die leicht flüchtigen Amine verdampfen dabei in einem Verdampfer, und die störenden Rückstände werden als Verdampfungsrückstände abgetrennt. Aufgrund des höheren Molekulargewichts der Nitrosamine bleibt in Abhängigkeit von deren jeweiligen Dampfdruck in dem Verdampfungsrückstand jedoch auch immer ein Teil der Nitrosamine zurück, da Nitrosamine einen geringeren Dampfdruck als die entsprechenden Amine zeigen. Der Verdampfungsrückstand enthält daher einen nennenswerten Anteil an Nitrosaminen und muss als Sondermüll entsorgt werden. Und selbst im aufgereinigten Lösungsmittel bleiben dadurch noch Nitrosamine zurück.

Die Menge an emittiertem Nitrosamin hängt neben den Prozessbedingungen besonders von der Beständigkeit des Nitrosamins und seiner Bindungsstärke mit Wasser ab. Bestandteile wie NDMA sind zum Beispiel sehr flüchtig.

Bei der Verwendung von Aminosäuresalzen, die selbst keinen merklichen Dampfdruck haben, sind auch die daraus gebildeten Nitrosamine nicht flüchtig, sodass diese in Lösung bleiben und nicht in die Atmosphäre ausgetragen werden können. Jedoch sammelt sich im Prozess mit der Zeit eine hohe Konzentration an Nitrosaminen im Lösungsmittel an, die sich einerseits negativ auf den Wirkungsgrad auswirkt, und auch den Umgang mit dem Lösungsmittel erschwert.

Da Aminosäuresalze keinen nennenswerten Dampfdruck zeigen ist bei Lösungsmitteln, die auf Aminosäuresalze basieren, keine destillative Aufreinigung des Lösungsmittels durch Verdampfung möglich. Bei auf Aminosäuresalzen basierten Lösungsmitteln kann die Regenerierung durch Kristallisation der Aminosäuresalze erfolgen. Die Nitrosamine wirken sich jedoch auch negativ auf den Regenerierungprozess aus und belasten zudem die Abfallprodukte, die deswegen auch kostenaufwendig als Sondermüll entsorgt werden müssen. Wenngleich bei der Verwendung von Aminosäuresalzen die Emissionen der Nitrosamine über das gereinigte Rauchgas ausgeschlossen ist, wäre eine Reduzierung der Nitrosamine auf möglichst geringes Maß von großem Vorteil.

Gegenwärtig wird versucht der Problematik der Nitosaminbildung dadurch entgegen zu wirken, dass weniger Stickoxide NOₓ in den Absorber gelangen. Auch werden Inhibitoren entwickelt, welche die Reaktion der Nitrosaminbildung vermeiden bzw. vermindern sollen. Auch hat sich herausgestellt, dass besonders ausgestaltete Absorberkolonnen die Nitrosaminbildung verringern können. Allerdings konnten sich keine der Versuche, einer Nitrosaminbildung entgegen zu wirken, oder Nitrosamine effektiv zu zerstören, bislang wirtschaftlich durchsetzen. Aufgabe der Erfindung ist es, ein einfaches Verfahren anzugeben, durch welches sich Nitrosamine aus einem Produkt, insbesondere einem Lösungsmittel zur Absorption von CO₂ aus einem Rauchgas einer Verbrennungsanlage, effizient und umweltgerecht beseitigen lassen, ohne dass die Amine wesentlich zerstört werden, und ohne das eine kostenaufwendige Entsorgung der Degradationsprodukte erforderlich ist. Zudem gilt es die Nachteile aus dem Stand der Technik zu vermeiden. Außerdem ist es Aufgabe der Erfindung, eine CO₂ Capture-Anlage anzugeben durch die eine Reduzierung der gebildeten Nitrosamine möglich ist. Ferner ist es noch Aufgabe der Erfindung, eine Vorrichtung zum Aufreinigen eines mit Nitrosamin verunreinigten Abfallproduktes aus einer CO₂ Capture-Anlage anzugeben. Die auf ein Verfahren gerichtete Aufgabe der Erfindung wird gelöst durch die Merkmale des Anspruchs 1.

Demnach wird bei dem Verfahren zum Aufreinigen eines mit Nitrosamin verunreinigten Produktes aus einer Prozessanlage das verunreinigte Produkt mit UV-Strahlung für eine Verweilzeit t bestrahlt, sodass die Nitrosamine weitgehend zerstört werden.

Die Erfindung macht sich dabei die geringe UV-Stabilität von Nitrosaminen zu nutze, wobei die Nitrosamine durch Strahlung im UV-Bereich zerstört werden. Aus "Hoppe-Seyler's Zeitschrift für physiologische Chemie" (Band 348, Heft 1, Seiten 852-854, ISSN 1437-4315, veröffentlich am 24/11/2009) ist von JOHANNES SANDER "Eine Methode zum Nachweis von Nitrosaminen" bekannt. Darin ist beschrieben, wie UV-Strahlung zum Nachweis von Nitrosaminen verwendet werden kann, indem die durch die Bestrahlung mit UV-Licht entstehenden Spaltprodukte detektiert werden.

Es wurde bislang jedoch bewusst darauf verzichtet, UV-Strahlung auch zur Zerstörung von Nitrosamninen einzusetzen, da davon auszugehen war, dass andere Komponenten in dem zu behandelnden Produkt durch die UV-Strahlung ebenfalls zerstört oder geschädigt werden können. Außerdem ist die Zerstörungsrate von Nitrosaminen bei Behandlung mit UV-Strahlung stark von einem niedrigen pH-Wert abhängig, der oft nicht vorliegt.

Die Erfindung geht nun von der überraschenden Erkenntnis aus, dass durch UV-Strahlung entgegen aller Annahmen eine umfassende Zerstörung von Nitrosaminen im großtechnischen Einsatz möglich ist. Die durch die UV-Strahlung gebildeten Reaktionsprodukte sind dabei unkritisch für die Umwelt. Um die Aminosäure nicht zu schädigen, wird erfindungsgemäß eine Verweilzeit t gewählt, bei der zwar eine Zerstörung der Nitrosamine gewährleistet ist, jedoch die Aminosäure als aktive Substanz weitgehend unbeschadet erhalten bleibt. Durch eine günstige Wahl der Vereilzeit t ist ein optimales Verhältnis von Abbau der Nitrosamine und dem Erhalt der Amine einstellbar.

Durch die Erfindung werden die Nitrosamine im Prozess zerstört, sodass eine Minimierung der durch den CO₂-Capture-Prozess gebildeten Nitrosamine erreicht wird. Da eine aufwendige Entsorgung der Nitrosamine vermieden wird, lässt sich eine Prozessanlage, bei der die Nitrosamine gemäß der Lehre der Erfindung zerstört werden, ohne eine Kostenaufwendige Entsorgung der mit Nitrosaminen belasteten Lösungsmittel oder Abfallprodukte betreiben. Alles in allem wird durch die Erfindung der Aufwand für besondere Maßnahmen im Umgang mit dem nitrosaminhaltigen Lösungsmittel reduziert.

Selbst für den Fachmann ist es nicht naheliegend, zur Zerstörung von Nitrosaminen ein aminbasiertes Lösungsmittel mit UV-Strahlung zu behandeln, da Amine ebenfalls nicht uneingeschränkt beständig gegenüber einer Bestrahlung mit UV-Licht sind. Wie aber in einer Vielzahl an der Erfindung zugrundeliegenden Versuchen nachgewiesen wurde, sind aber gerade in einem Wellenlängenbereich zwischen 180 und 350 nm die üblichen Amine verhältnismäßig stabil, Nitrosamine hingegen nicht. Dieses Spektrum gewährleistet also einerseits eine hohe Zerstörungsrate an Nitrosaminen, und stellt außerdem sicher, dass die Amine im Lösungsmittel weitgehend unbeschadet bleiben. Als besonders effizient wurde dabei der Wellenlängenbereich zwischen 220 und 280 nm identifiziert.

Durch die Intensität bzw. Stärke der UV-Strahlung und der Verweilzeit t, also die Dauer der UV-Bestrahlung, kann die Zerstörungsrate eingestellt werden. Je länger die Verweilzeit t und je höher die Intensität, desto geringer ist die verbleibende Nitrosaminkonzentration. Die Selektivität des Lösungsmittels bezüglich Nitrosaminen und Aminosäuresalz ist zudem so zu wählen, dass möglichst viele Nitrosamine zerstört werden und gleichzeitig die Aminosäuresalzmoleküle erhalten bleiben.

Als eine geeignete Verweilzeit t bei konstanter Intensität der UV-Strahlung haben sich Verweilzeiten von zwischen 2 und 500 Minuten heraus gestellt. Die Zerstörungsrate ist neben der Verweilzeit t auch von der Größe der bestrahlten Oberfläche abhängig, da die UV-Strahlung nur eine geringe Eindringtiefe in das Lösungsmittel hat. Je größer die Oberfläche, desto kleiner kann die Verweilzeit ausgelegt werden, und umgekehrt. Die Zerstörungsrate ist zudem abhängig von der Nitrosaminkonzenztration des Lösungsmittels. Eine Verweilzeit von 5-120 Minuten hat sich als besonders Vorteilhaft erwiesen.

Bei einer vorteilhaften Weiterentwicklung des Verfahrens wird der pH-Wert des verunreinigten Produktes vor der UV Bestrahlung auf zwischen 6 und 12, und weiter vorteilhaft auf zwischen 8 und 10, eingestellt. Ziel ist es dabei, den ph-Wert so niedrig wie möglich einzustellen. Durch die Aminosäure, bzw. das Aminosäuresalz ist das Produkt oder Lösungsmittel jedoch stark basisch, und hat somit einen hohen pH-Wert. Diese Weiterentwicklung geht dabei von der Erkenntnis aus, dass sie Zerstörung der Nitrosamine bei einem niedrigen pH-Wert am effektivsten abläuft, da die Stabilität der Nitrosamine mit sinkendem pH-Wert abnimmt. Der Lösungsmittelkreislauf im CO₂ Capture-Prozess hat an den verschiedenen Stellen unterschiedliche pH-Werte. Die Behandlung des Produktes oder Lösungsmittels mit UV-Licht erfolgt deswegen vorteilhaft an einer Stelle im Lösungsmittelkreislauf, die einen möglichst niedrigen pH-Wert aufweist. Idealerweise ist dies die Stelle mit der höchsten Beladung an CO₂, da durch das CO₂ der pH-Wert des Lösungsmittels gesenkt wird.

Bei einer alternativen Weiterentwicklung des Verfahrens wird der ph-Wert durch Zugabe einer zusätzlichen Säure eingestellt. Durch die Zuführung einer Säure wird der pH-Wert des verunreinigten Produktes weiter reduziert. Als Säuren eignen sich dabei Salzsäure oder auch Phosphorsäure. Diese Weiterentwicklung geht ebenfalls von der Erkenntnis aus, dass Nitrosamine mit sinkendem pH-Werten instabiler werden. Durch diese Maßnahme lässt sich die Bestrahlungsstärke der UV-Lichtquelle und/oder die Verweilzeit t reduzieren, was zu einer Beschleunigung des Verfahrens führt.

In einer vorteilhaften Anwendung des Verfahrens handelt es sich bei dem verunreinigten Produkt um ein Lösungsmittel, dass aus einem CO₂ Capture-Prozess einer fossil befeuerten Kraftwerksanlage stammt. Das verunreinigte Lösungsmittel enthält dabei mindestens die Konzentration an Nitrosamin, die im CO₂ Capture-Prozess nach einer Zeit x, gebildet wird. Das Verfahren findet dabei vorzugsweise im CO₂ Capture-Prozess statt, und wird innerhalb des Lösungsmittelkreislaufs des CO₂ Capture-Prozesses durchgeführt.

Als besonders vorteilhaft für aminbasierte flüchtige Lösungsmittel hat sich der Rücklauf des Kondensats aus dem Desorptionsprozess des CO₂ Capture-Prozesses für die Behandlung mit UV-Strahlung erwiesen, da das Kondensat eine besonders hohe Beladung an Nitrosaminen aufweist. Das Kondensat zeigt deshalb eine hohe Nitrosaminkonzentration, da im Desorber durch die hohen Temperaturen die flüchtigen Nitrosamine weitgehend in die Gasphase übergehen, und zusammen mit dem gasförmigen CO₂ und verdampftem Lösungsmittel als Brüdendampf einem nachgeschalteten Kondensator zugeführt werden. In dem Kondensator kondensiert das verdampfte Lösungsmittel als Kondensat und bindet wiederum die Nitrosamine.

Der Kondensatstrom ist dabei Bestandteil des Lösungsmittelkreislaufs, und entspricht einem Teilstrom des Lösungsmittelkreislaufes. Der Kondensatstrom ist in seiner Menge wesentlich geringer als der gesamte Lösungsmittelstrom, was eine höhere Verweilzeit des Kondensatstroms in Verbindung mit der UV-Strahlung ermöglicht. Das Kondensat eignet sich vor allem dann besonders gut und vorteilhaft für die Behandlung mit UV-Strahlung, wenn aminbasierte Lösungsmittel wie MEA verwendet werden, die leichtflüchtige Nitrosamine bildet. Da das Kondensat mit CO₂ gesättigt ist weist es zudem einen für die Behandlung mit UV-Strahlung günstigen pH-Wert auf.

Besonders vorteilhaft hat sich die Verwendung von Aminosäuresalz als aktive Waschsubstanz in wässriger Lösung als Lösungsmittel erwiesen, da hier keine Nitrosamine ausgetragen werden sondern sich im Prozess anreichern. Aminosäuresalze haben keinen nachweisbaren Dampfdruck und eignen sich daher vorteilhaft für die Rauchgaswäsche.

Alternativ lässt sich das Verfahren auch bei der Wiederaufbereitung eines Abfallproduktes einsetzen. Bei dem verunreinigten Produkt handelt es sich dann um ein mit Nitrosaminen verunreinigtes Abfallprodukt, dass beispielsweise bei der Wiederaufbereitung (Reclaiming) eines mit Stickoxiden NOx und/oder Schwefeloxiden SOx verunreinigtem Lösungsmittel aus einem CO2 Capture-Prozess gebildet wird. Das Abfallprodukt ist dabei oft mit Nitrosaminen aufkonzentriert.

Das Verfahren lässt sich vorteilhaft auch bei anderen Wiederaufbereitungsverfahren zur Zerstörung der Nitrosamine einsetzen. Nach ausreichender Verweilzeit kann das weitgehend nitrosaminfreie Abfallprodukt konventionell entsorgt werden. Durch die Behandlung von Abfallprodukten mit UV-Strahlung, und die damit verbundene Herabsetzung der giftigen gesundheitsschädlichen Eigenschaften, ist zudem deren Handhabung wesentlich einfacher.

Das Verfahren lässt sich in einer anderen vorteilhaften Anwendung auch in einer Weise Betreiben, bei der das verunreinigte Produkt chargenweise entnommen und mit UV-Strahlung behandelt wird. Dadurch wird der Aufreinigungsprozess von dem CO₂ Capture-Prozess getrennt gesteuert. Dies ist vor allem dann von Vorteil, wenn die Aufreinigung und der CO₂ Capture-Prozess nicht am gleichen Ort stattfinden. Die chargenweise Aufbereitung ist auch dann von Vorteil, wenn die Aufreinigungsprozess in einem zeitlichen Bereich durchgeführt wird, in dem die fossil befeuerte Kraftwerksanlage eine Leistung von weniger als die Nennleistung zu erbringen hat. Dies ist beispielsweise nachts der Fall, wenn der Kraftwerksanlage weniger Leistung abverlangt wird und somit ungenutzte Leistungsreserven zur Verfügung stehen.

Die auf eine Vorrichtung gerichtete Aufgabe der Erfindung wird gelöst durch die Merkmale des Patentanspruchs 10 und 14.

Die Vorrichtung zum Regenieren eines mit Nitrosamin verunreinigten Produktes aus einer CO₂ Capture-Anlage umfasst dabei einen Absorber und einen Desorber, die durch eine Leitung für ein beladenes Lösungsmittel und eine Leitung für ein regeneriertes Lösungsmittel derart miteinander verbunden sind, dass ein Lösungsmittelkreislauf zwischen Absorber und Desorber gebildet ist. In den Lösungsmittelkreislauf wird nun erfindungsgemäß eine UV-Strahlungsquelle geschaltet, sodass das Lösungsmittel im Lösungsmittelkreislauf mit UV-Licht aus der UV-Strahlungsquelle beaufschlagt ist.

Besonders von Vorteil ist es dabei, wenn die UV-Strahlungsquelle in die Leitung, oder einer kleinen Bypassleitung für ein beladenes Lösungsmittel angeschlossen ist, sodass die UV-Strahlungsquelle mit einem Lösungsmittel beaufschlagt ist, welches eine hohe Konzentration an CO₂ aufweist. Die UV-Strahlungsquelle hat dabei eine Wellenlänge λ von zwischen 180 und 350 nm, und vorzugsweise eine Wellenlänge λ zwischen 220 und 280 nm. Anstatt einer Strahlungsquelle können auch mehrere Strahlungsquellen an unterschiedlichen Stellen im Lösungsmittelkreislauf angeordnet sein. Ziel dabei ist es, dass die UV-Strahlungsquelle eine große Oberfläche aufweist, sodass selbst bei geringer Eindringtiefe der UV-Strahlung, über die große Oberfläche ein entsprechender Eintrag an UV-Strahlung in das Lösungsmittel gewährleistet ist.

In einer vorteilhaften Weiterentwicklung ist der UV-Lichtquelle eine Adsorptionsstufe nachgeschaltet, durch welche die Reaktionsprodukte, die in Verbindung mit der UV-Strahlung gebildet werden, aus dem Lösungsmittel entzogen werden können. Derartige Adsorptionsstufen können als Aktivkohlefilter oder auch in Form von Ionentauscherharze ausgestaltet sein. Durch die Adsorptionsstufe können so inaktive Substanzen aus dem Lösungsmittelkreislauf herausgefiltert werden, die sonst in dem Lösungsmittelkreislauf nur unnötig umgepumpt werden müssen.

Die Vorrichtung zum Aufreinigen eines mit Nitrosamin verunreinigten Abfallproduktes aus einer CO₂ Capture-Anlage umfasst dabei im Wesentlichen einen Reaktor oder Abfallbehälter, in dem sich das mit Nitrosaminen verunreinigte Abfallprodukt befindet, und eine UV-Strahlungsquelle, die in dem Reaktor oder Abfallbehälter angeordnet ist, sodass das verunreinigte Abfallprodukt mit UV-Licht aus der UV-Strahlungsquelle beaufschlagt ist.

In einer vorteilhaften Ausführungsform der Vorrichtung zum Aufreinigen eines mit Nitrosamin verunreinigten Abfallproduktes, ist dem verunreinigten Abfallprodukt über eine Zuführung eine weitere Säure zuführbar. Dazu weist der Reaktor oder Abfallbehälter entsprechende Flansche oder Einfüllstutzen auf.

Nachfolgend werden Ausführungsbeispiele der Erfindung anhand von Figuren näher erläutert. Darin zeigt:
- FIG 1: ein Prozessschaltbild eines Verfahrens zum Aufreinigen eines mit Nitrosamin verunreinigten Produktes,
- FIG 2: eine CO₂ Capture-Anlage mit Nitrosaminzerstörung

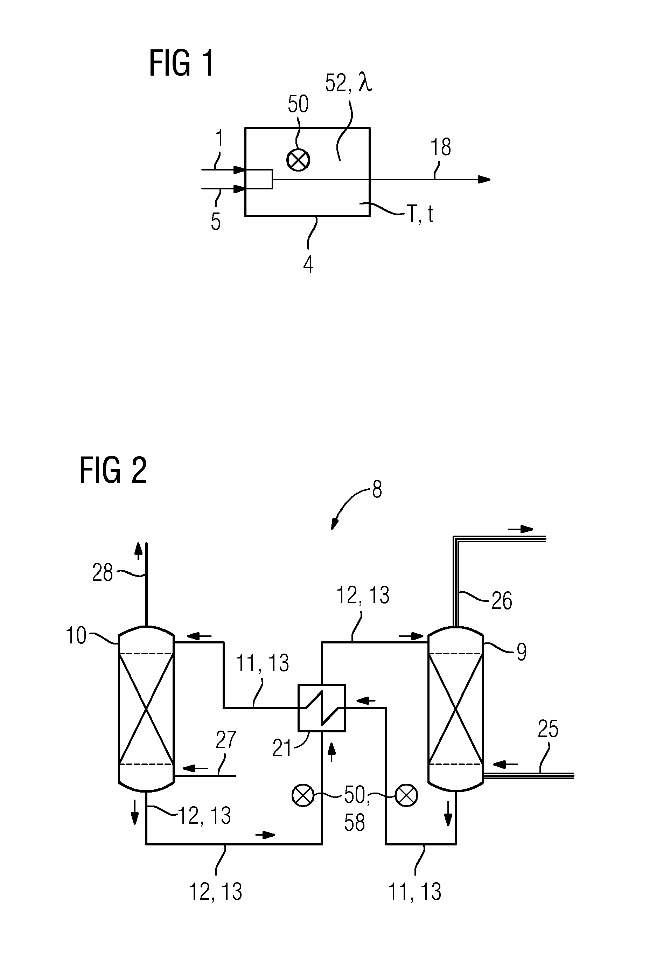

- FIG 2: eine bevorzugte Ausführungsform der CO₂ Capture-Anlage mit Nitrosaminzerstörung

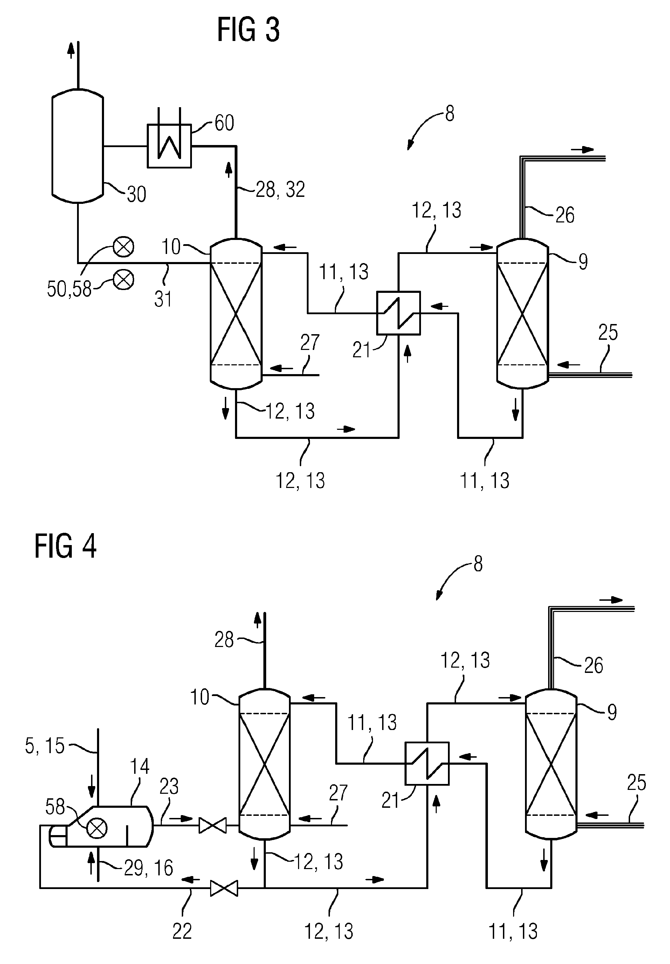

- FIG 4: eine CO₂ Capture-Anlage mit einem angeschlossenem Reaktor zur Nitrosaminzerstörung

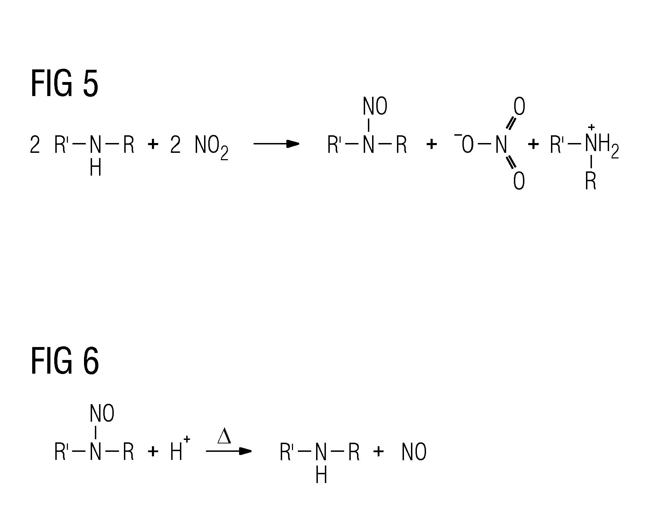

- FIG 5: ein Reaktionsschaubild mit einer beispielhaften Bildung einer stabilen Nitrosaminverbindung,
- FIG 6: ein Reaktionsschaubild mit einer beispielhaften UV-Behandlung einer stabilen Nitrosaminverbindung.

FIG 1 zeigt ein Verfahrensschritt 4 zum Aufreinigen eines mit Nitrosaminen verunreinigten Produktes 1 in der Darstellung eines Prozessschaltbildes. Das Verfahren kann dabei Bestandteil einer Prozessanlage sein, die beispielsweise als CO₂ Capture-Prozess ausgestaltet ist.

In dem Verfahrensschritt 4 wird ein mit Nitrosaminen verunreinigten Produkt 1 eingeleitet. Das Produkt 1 ist beispielsweise ein Waschmittel zur nasschemischen Wäsche von Kohlendioxid aus einem CO₂ Capture-Prozess, das vorzugsweise ein Lösungsmittel mit einer Aminosäure als aktive Waschsubstanz ist.

Bei dem Verfahrensschritt 4 werden die in dem verunreinigten Produkt 1 enthaltenen Nitrosamine durch Bestrahlung mit UV-Strahlung 50 zerstört. Die Reaktionsprodukte der Bestrahlung sind für Organismen gesundheitlich unkritisch. Um das verunreinigte Produkt 1 mit UV-Strahlung 50 mit einer Wellenlänge λ zu bestrahlen sieht der Verfahrensschritt 4 eine UV-Lichtquelle 58 vor, an der das verunreinigte Produkt 1 vorbei geleitet wird.

Es hat sich gezeigt, dass bei Wellenlängen λ von zwischen 220 und 280 nm eine effektive Zerstörung der Nitrosamine einsetzt. Mit höherer Leistungsstärke der UV-Lichtquelle 58 wird dieser Prozess beschleunigt. Da die in dem verunreinigten Produkt 1 enthaltenen Aminosäuren jedoch auch nur begrenzt stabil sind, kann die Leistungsstärke bzw. die Wellenlänge λ nicht frei gewählt werden. Es gilt ein optimiertes Verhältnis aus Wellenlänge λ und Intensität der UV-Strahlung sowie Verweildauer t in Abhängigkeit der Aminosäure und dem ph-Wert des Produktes zu finden. In Abhängigkeit der verwendeten Aminosäure muss daher eine Leistung und Wellenlänge λ der UV-Lichtquelle 58 gewählt werden, bei der es einerseits noch nicht zu einer Schädigung der Aminosäure kommt, die hingegen jedoch ausreicht, um eine effektive Zerstörung der Nitrosamine zu bewirken.

Als Besonders effektiv hat sich die Verwendung von Aminosäuresalz als aktive Waschsubstanz erwiesen, da es nicht wie Alkanolamine ausdampfen kann. Bevorzugt wird dabei die Aminosäuresalze aus der sekundären Gruppe verwendet.

Das Verfahren sieht vor, die Bestrahlung mit UV-Strahlung 50 vorzugsweise bei einem möglichst neutralen ph-Wert durchzuführen. Das Verfahren wird daher vorzugsweise bei einem Produkt angewendet, welches eine hohe Beladung an CO₂ hat, sodass der ph-Wert im Bereich zwischen 8 und 11 liegt.

Um den pH-Wert zu senken sieht das Verfahren alternativ die Zuführung einer Säure 5 vor. Durch das Hinzufügen einer Säure zu dem Produkt lässt sich der ph-Wert auf einen bevorzugten Bereich einstellen. Bereits bei einem pH-Wert von unter 11 ist eine signifikante Steigerung der Zerstörungsrate der Nitrosamine nachweisbar. Bei dem Verfahrensschritt 1 wird durch Zugabe der Säure 5 vorzugsweise ein möglichst ausgeglichener pH-Wert eingestellt.

Das Produkt wird für eine Verweilzeit t der UV-Strahlung 50 ausgesetzt. Diese Verweilzeit t entspricht der Zeit, nach der die Verunreinigungen, also die Nitrosamine, weitgehend zerstört wurden. Den Verfahrensschritt 4 verlässt nun ein aufgereinigtes Produkt 18, dass weiter in der Prozessanlage geführt, entsorg oder anderweitig weiter verarbeitet wird.

In FIG 2 ist eine erfindungsgemäße CO₂ Capture-Anlage 8 dargestellt. Die CO₂ Capture-Anlage 8 besteht im Wesentlichen aus einem Absorber 9 und einem Desorber 10, sowie einer Leitung 11 für ein beladenes Lösungsmittel und einer Leitung 12 für ein regeneriertes Lösungsmittel die zusammen einen Lösungsmittelkreislauf 13 für ein Lösungsmittel bilden. In den Lösungsmittelkreislauf ist ein Kreuzstromwärmetauscher 21 geschaltet, durch den Wärme von dem regenerierten Lösungsmittel auf das beladene Lösungsmittel 11 übertragbar ist.

Nicht dargestellt sind hier weitere Wärmetauscher zur Erwärmung oder Abkühlung des Lösungsmittelstromes, die an unterschiedlichen Stellen des Lösungsmittelkreislaufes 13 weiterhin zweckmäßigerweise eingesetzt werden. Ebenso wurde darauf verzichtet, für die Veranschaulichung der Erfindung nicht relevante Zusatzkomponenten, wie Pumpen, Messfühler oder Steuer- und Regelvorrichtungen darzustellen.

Dem Absorber wird im unteren Bereich ein CO₂-haltiges Rauchgas 25 zugeführt, das beispielsweise aus einer fossil befeuerten Kraftwerksanlage stammt. Derartige Rauchgase 25 enthalten neben CO₂ auch Verbindungen wie N₂, O₂, SOₓ und NOₓ, die mit in die CO₂ Capture-Anlage 8 eingebracht werden. Im oberen Bereich des Absorbers 9 wird ein im Wesentlichen von CO₂ befreites Rauchgas 26 ausgeleitet, das neben anderen Rauchgaskomponenten noch N₂ und O₂ enthält.

In dem Absorber 9 wird CO₂ durch ein Lösungsmittel nasschemisch herausgewaschen. Zur Erhöhung der Kapazität des Lösungsmittels ist in dem Lösungsmittel ein Amin (Aminosäure oder Aminosäuresalz) gelöst. Die Amine in dem Lösungsmittel bilden zusammen mit dem NOₓ aus dem Rauchgas Nitrosamine. Über die Leitung 11 wird das beladene, und mit Nitrosaminen verunreinigte Lösungsmittel in den oberen Bereich des Desorbers 10 geleitet. In dem Desorber 10 wird unter Zuführung von Wärme 27, beispielsweise in Form von Heizdampf, das Lösungsmittel gestrippt, bzw. das CO₂ aus dem Lösungsmittel ausgekocht. Am Kopf des Desorber 10 wird ein Bürdendampf ausgeleitet, der aus gasförmigem CO₂ und verdampften Dampf besteht. Im unteren Bereich wird das nun weitgehend von CO2 befreite, aber noch mit Nitrosaminen verunreinigte Lösungsmittel über die Leitung 12 ausgeleitet.

Erfindungsgemäß sind nun in den Lösungsmittelkreislauf 13 eine oder mehrere UV-Lichtquellen 58 derart angeordnet, dass das Lösungsmittel durch UV-Strahlung 50 der UV-Lichtquellen 58 beaufschlagbar ist. Die Strömungsgeschwindigkeit des Lösungsmittels ist dabei so gewählt, dass Lösungsmittel für eine Verweilzeit t der UV-Strahlung 50 ausgesetzt ist. Besonders vorteilhaft ist der einbau in Leitung 11 und/oder 13, da hier der pH-Wert am niedrigsten ist.

FIG 3 zeigt eine weitere bevorzugte Ausführungsform der CO₂ Capture-Anlage mit einer speziellen Anordnung der UV-Lichtquelle 58. Dargestellt ist die in FIG 2 beschriebene CO₂ Capture-Anlage, jedoch mit einer anderen Anordnung der UV-Lichtquelle 58. FIG 3 zeigt den Desorber 10, dem zur Ausleitung eines Brüdendampfes 28 über eine Brüdendampfleitung 32, ein Kondensator 30 nachgeschaltet ist. In die Brüdendampfleitung 32 können noch Wärmetauscher 60 geschaltet sein, die hier nicht dargestellt sind, da sie nicht wesentlich für die Erfindung sind. In dem Kondensator 30 wird die Temperatur des Brüdendampfes 28 auf ca. 30 bis 40 °C reduziert, wodurch der Brüdendampf 28 kondensiert. Das Kondensat wird über eine Kondensatrückführleitung 31, die den Kondensator wieder mit dem Desorber 10 verbindet in den Kondensator zurückgeführt.

Besonders vorteilhaft ist die UV-Lichtquelle 58 in der Kondensatrückführleitung 31 angeordnet, sodass das Kondensat mit UV-Strahlung 50 beaufschlagbar ist. Durch die Hohe Temperatur im Desorber 10 befindet sich ein großer Teil der Nitrosamine in der Gasphase und wird zusammen mit dem gasförmigen CO₂ und Dampf in Form von Brüdendampf 28 aus dem Desorber 10 ausgetragen. In dem Kondensator 30 kondensiert der Dampf und bindet dadurch die Nitrosamine wieder in Form von Kondensat. Die Behandlung des Kondensats mit UV-Strahlung 50 ist besonders günstig, da das Kondensat einerseits eine hohe Konzentration an Nitrosaminen aufweiset, und da der zu behandelnde Kondensatstrom wesentlich geringer ist als der Lösungsmittelstrom der ganzen CO₂ Capture Anlage. Dadurch lassen sich längere Verweilzeiten t einstellen. Hinzu kommt, dass auch der pH-Wert des Kondensats bereits auf einem für die Nitrosaminzerstörung günstigen Niveau liegt, da das Kondensat mit CO₂ gesättigt ist.

FIG 4 zeigt eine alternative Ausgestaltung der CO₂ Capture-Anlage, in der das Lösungsmittel nicht im Lösungsmittelkreislauf der UV-Strahlung 50 ausgesetzt wird, sondern bei der ein Teil oder eine Charge an Lösungsmittel aus dem Lösungsmittelkreislauf ausgeleitet, und die Behandlung mit UV-Strahlung 50 in einem separaten Reaktor 14 statt findet.

Der Reaktor 14 ist dabei über eine Zuführleitung 22 an die Leitung 12 angeschlossen. Nicht dargestellt ist eine alternative Ausführungsform, bei der der Reaktor zur Ausleitung eines Lösungsmittels an die Leitung 11 angeschlossen. Ist.

In dem Reaktor 14 ist eine UV-Lichtquelle 58 angeordnet. Über eine Leitung 15 kann dem Reaktor 14 zudem eine Säure 5 zugeführt werden. Durch die Bestrahlung des Lösungsmittels mit UV-Strahlung 50 durch eine UV-Lichtquelle 58, mit einer definierten Wellenlänge λ und einer definierten Leistung für eine Verweilzeit t, werden die Nitrosamine in dem Lösungsmittel weitgehend zerstört und zerfallen in für den Organismus unbedenkliche Produkte. Über eine Abführleitung 23, die den thermischen Reaktor mit dem Desorber 10 verbindet, ist dem Desorber ein regeneriertes und von Nitrosaminen Verunreinigungen weitgehend befreites Lösungsmittel rückführbar. Alternativ kann der Reaktor 14 auch parallel zu der Leitung 11 geschaltet werden. Eine Schaltung des Reaktors 14 in die Leitung 11 oder 12 ist auch möglich.

FIG 5 zeigt ein Reaktionsschaubild mit einer beispielhaften Bildung einer stabilen Nitrosaminverbindung aus einem sekundären Amin und Stickstoffdioxid. Bei dem Amin kann es sich um ein Alkanolamin, eine Aminosäure oder ein Aminosäuresalz handeln. Die gebildete Nitrosaminverbindung ist unter den Bedingungen des CO₂ Capture-Prozesses stabil. R kann für einen Aryl oder Alkylrest steht. R' kann ein Aryl, Alkyl, oder eine Deprotonierte Säure mit entsprechendem Kation sein.

In FIG 6 ist nun in einem Reaktionsschaubild die erfindungsgemäße Behandlung einer stabilen Nitrosaminverbindung mit UV-Strahlung 50 dargestellt. Die aus einer sekundären Aminosäure gebildete stabile Nitrosaminverbindung zerfällt durch UV-Strahlung 50 in für den menschlichen Organismus unbedenkliche Produkte.

Der Vorteil der Erfindung liegt vor allem darin, dass sie sich bei kleinen aber auch bei großen Prozessanlagen, wie beispielsweise einer CO₂ Capture-Anlage gleichermaßen erfolgversprechend anwenden lässt. Auch lässt sich die Erfindung problemlos in bereits bestehende Prozessanlagen integrieren. Durch die Erfindung wird sich in jedem Fall die durch das Rauchgas emittierte Nitrosaminkonzentration, als auch die Nitrosaminkonzentration in dem Lösungsmittel und den Abfallprodukten wesentlich reduzieren lassen.

## Patentansprüche

1. Verfahren (4) zum Aufreinigen eines mit Nitrosaminen verunreinigten, CO₂-haltingen Produktes (1) einer Prozessanlage (2), bei dem das verunreinigte Produkt (1) mit UV-Strahlung (50) bestrahlt wird, sodass die Nitrosamine weitgehend zerstört werden.

2. Verfahren nach Anspruch 1, wobei dem die Wellenlänge λ der UV-Strahlung auf zwischen 180 und 350 nm, und vorzugsweise auf zwischen 220 und 280 nm, eingestellt wird.

3. Verfahren nach einem der Ansprüche 1 oder 2, wobei das verunreinigte Produkt (1) mit UV-Strahlung (50) für eine Verweilzeit t bestrahlt wird, wobei die Verweilzeit t zwischen 2 und 500 Minuten eingestellt wird.

4. Verfahren nach einem der Ansprüche 1 bis 3, wobei der pH-Wert des verunreinigten, CO₂-haltingen Produktes (1) vor der Bestrahlung mit UV-Strahlung (50) auf zwischen 6 und 12, und weiter vorteilhaft auf zwischen 8 und 10, eingestellt wird.

5. Verfahren nach Anspruch 4, bei dem der ph-Wert durch eine hohe Beladung des verunreinigten, CO₂-haltingen Produktes Prozess CO₂ eingestellt wird.

6. Verfahren nach einem der Ansprüche 1 bis 5, bei dem der ph-Wert durch Zugabe einer Säure (5) eingestellt wird.

7. Verfahren nach einem der Ansprüche 1 bis 6, wobei das verunreinigte, CO₂-haltinge Produkt (1) ein Lösungsmittel (3) aus einem CO₂ Capture-Prozess (6) einer fossil befeuerten Kraftwerksanlage ist, wobei der Rücklauf des Kondensats aus dem Desorptionsprozess des CO₂ Capture Prozesses (6) mit UV-Strahlung (50) bestrahlt wird.

8. Verfahren nach einem der Ansprüche 1 bis 6, wobei es sich bei dem verunreinigten, CO₂-haltingen Produkt (1) um einen mit Nitrosamin verunreinigtes Abfallprodukt (51) handelt, dass bei der Wiederaufbereitung eines mit Stickoxiden NOx und/oder mit Schwefeloxiden SOx verunreinigten Lösungsmittels (3) aus einem CO₂ Capture-Prozess (6) gebildet wird.

9. Verfahren nach einem der Ansprüche 7 oder 8, wobei die Aufreinigung das verunreinigte, CO₂-haltingen Produktes (1) innerhalb des Lösungsmittelkreislaufs des CO₂ Capture-Prozesses (6) durchgeführt wird und.

10. Verfahren nach einem der Ansprüche 7 bis 9, wobei ein Lösungsmittel (3) verwendet wird, in welchem ein sekundäres Aminosäuresalz als waschaktive Substanz gelöst ist.

11. Verfahren nach einem der Ansprüche 7 bis 9, wobei ein Lösungsmittel (3) mit einer Aminosäure verwendet wird.

12. CO₂ Capture-Anlage (8) zum Abscheiden von CO2 aus dem Rauchgas einer fossil befeuerten Kraftwerksanlage, umfassend einen Absorber (9) und einen Desorber (10), welche durch eine Leitung (11) für ein beladenes Lösungsmittel und eine Leitung (12) für ein regeneriertes Lösungsmittel derart miteinander verbunden sind, dass ein Lösungsmittelkreislauf (13) zwischen Absorber (9) und Desorber (10) gebildet ist,
**dadurch gekennzeichnet, dass**
in den Lösungsmittelkreislauf (13) eine UV-Lichtquelle (58) geschaltet ist, sodass das Lösungsmittel im Lösungsmittelkreislauf (13) mit UV-Strahlung (50) aus der UV-Lichtquelle (58) beaufschlagbar ist.

13. CO₂ Capture-Anlage (8) nach Anspruch 12, **dadurch gekennzeichnet, dass** die UV-Lichtquelle (58) in die Leitung (1) für ein beladenes Lösungsmittel angeschlossen ist, sodass die UV-Lichtquelle (58) mit einem Lösungsmittel beaufschlagbar ist.

14. CO₂ Capture-Anlage (8) nach Anspruch 12, **dadurch gekennzeichnet, dass** dem Desorber (10) über eine Brüdendampfleitung (32) ein Kondensator (30) nachgeschaltet ist, der wiederum über eine Kondensatrückführleitung (31) zur Rückführung von Lösungsmittel in Form von Kondensat mit dem Desorber (10) verbunden ist, und dass die UV-Lichtquelle (58) in die Kondensatrückführleitung (31) geschaltet ist, sodass die UV-Lichtquelle (58) mit einem Kondensat beaufschlagbar ist.

15. CO₂ Capture-Anlage (8) nach einem der Ansprüche 12 bis 14, **dadurch gekennzeichnet, dass** die UV-Lichtquelle (58) auf eine Wellenlänge λ von zwischen 180 und 350 nm, und vorzugsweise zwischen 220 und 280 nm, eingestellt ist.

16. CO₂ Capture-Anlage (8) nach einem der Ansprüche 12 bis 15, **dadurch gekennzeichnet, dass** die UV-Lichtquelle (58) eine große Oberfläche aufweist, sodass trotz geringer Eindringtiefe ein entsprechender Eintrag an UV-Strahlung (50) in das Lösungsmittel gewährleistet ist.

17. CO₂ Capture-Anlage (8) nach einem der Ansprüche 12 bis 16, **dadurch gekennzeichnet, dass** der UV-Lichtquelle (58) eine Adsorptionsstufe nachgeschaltet ist, durch welche die Reaktionsprodukte, die in Verbindung mit der UV-Strahlung (50) gebildet werden, aus dem Lösungsmittel entziehbar sind.

18. Vorrichtung (7) zum Aufreinigen eines mit Nitrosamin verunreinigten Abfallproduktes (51) aus einer CO₂ Capture-Anlage (8) **dadurch gekennzeichnet, dass**
in dem mit Nitrosamin verunreinigten Abfallprodukt (51) eine UV-Lichtquelle (58) angeordnet ist, sodass das verunreinigte Abfallprodukt (51) mit UV-Strahlung (50) aus der UV-Lichtquelle (58) beaufschlagbar ist.

19. Vorrichtung (7) nach Anspruch 14, **dadurch gekennzeichnet, dass** dem mit Nitrosamin verunreinigten Abfallprodukt (51) über ein Zuführung (55) eine Säure zuführbar ist.
